# EUROPEAN PATENT SPECIFICATION

(11) **EP 2 147 965 B1**
(45) Date of publication and mention of the grant of the patent: **30.11.2016**
(21) Application number: 07721119.1
(22) Date of filing: 14.05.2007
(51) Int. Cl.: C10J 3/56

(54) **A COAL CIRCULATING FLUIDIZED BED COAL GAS GENERATING FURNACE SYSTEM**
KOHLENGASERZEUGENDES OFENSYSTEM MIT ZIRKULIERENDER KOHLEWIRBELSCHICHT
SYSTÈME DE FOUR DE GÉNÉRATION DE GAZ DE HOUILLE À LIT FLUIDISÉ ET CIRCULATION DE CHARBON

(43) Date of publication of application: 27.01.2010
(73) Proprietor: Keda Industrial Co., Ltd., Foshan, Guangdong 528313 (CN); Keda (Mas) Industrial Co., Ltd., Maanshan, Anhui 243041 (CN)
(72) Inventor: XIE, Zhiping, Foshan Guangdong 528313 (CN)
(74) Representative: Körber, Martin Hans
(86) International application number: PCT/CN2007/001546
(87) International publication number: WO 2008/138166

(56) References cited:
- EP-A2- 0 304 931
- WO-A1-2006/064320
- CN-A- 1 299 859
- CN-A- 101 063 053
- CN-U- 2 055 503
- CN-Y- 2 461 925
- US-A- 4 400 181
- US-A- 4 400 181
- US-A- 4 483 692
- US-A- 5 154 732
- US-A- 5 622 534
- US-A1- 2006 180 060

## Description

### FIELD OF THE TECHNOLOGY

The present invention relates to a coal gas producer system, particularly to a circulating coal fluidized bed coal gas producer system.

### BACKGROUND

In prior art, the heat of a coal gas producer for gasifying powder coal is generally used for producing steam, and then the steam and air used as gasification agent are guided into the producer for producing semi-water coal gas or water coal gas. For the reason that the heat energy of coal gas is quite high, the amount of produced steam greatly exceeds the need for the reaction of producing coal gas. Although the steam remained can be supplied to other productions, coal consumption for producing coal gas is increased, which may even be increased up to over 0.3 Kg/Nm³-0.4Kg/Nm³.

In addition, the temperature of gasification agent used by a conventional coal gas producer normally is 65°C-120°C. During reaction within the producer, the temperature of the gasification agent needs to rise to 1000°C-1100°C. During this period, a great amount of reaction heat is consumed, which further increases coal consumption for producing coal gas.

US 4,483,692 specifies a circulating fluidised coal gasifier comprising a first and secondary cyclone, wherein the first cyclone is water cooled.

### SUMMARY

A subject of the present invention is to provide a circulating coal fluidized bed coal gas producer system according to claim 1 in order to solve the technical deficiency such as high coal consumption during producing coal gas by a conventional coal gas producer system in prior art.

In order to accomplish the above subject, the present invention provides a circulating coal fluidized bed coal gas producer system, a coal gas producer, a high temperature separator, a heat exchanger, a low temperature separator, and a waste heat boiler, which are connected successively. The coal gas producer is provided with a first air inlet and at least one secondary air inlet for feeding high temperature gasification agent into the producer, and is provided with a circulating coal inlet for feeding circulating coal into the producer, the first air inlet and the secondary air inlet are connected to the heat exchanger, the heat exchanger is further connected to an air blower and the waste heat boiler respectively, and the circulating coal inlet is connected to the high temperature separator, the low temperature separator and the heat exchanger respectively.

The coal gas producer is provided with a coal gas outlet, a lower raw coal inlet and at least one upper raw coal inlet, the lower raw coal inlet and the upper raw coal inlet are connected a coal supplier, and the coal gas outlet is connected to the high temperature separator.

Star shaped material feeders are respectively disposed between the high temperature separator and the circulating coal inlet, and between the low temperature separator and the circulating coal inlet.

The heat exchanger is further connected to an air blower and the waste heat boiler respectively.

The system further includes a Venturi scrubber connected to the waste heat boiler and includes a washing tower connected to the Venturi scrubber, a sedimentation tank is disposed at the bottom of the washing tower, a slag eliminator is disposed at the bottom of the sedimentation tank, and a cooling tower is disposed between a cooling water inlet and a cooling water outlet of the washing tower.

Furthermore, temperature of the gasification agent when entering the producer via the first air inlet and the secondary air inlet is 750°C-850°C. Furthermore, amount of first gasification agent entering the producer via the first air inlet is 50%-60% of total amount of gasification agent at the heat exchanger, amount of secondary gasification agent entering the producer via the secondary air inlet is 35%-45% of the total amount of the gasification agent at the heat exchanger, and amount of gasification agent entering the producer via the circulating coal inlet is 5% of the total amount of the gasification agent at the heat exchanger.

Based on the above technical solution, the coal gas producer includes a producer body, bottom of the producer body is connected to a gas incoming chamber, air caps are disposed between the producer body and the gas incoming chamber, the first air inlet is disposed at the gas incoming chamber, and the lower raw coal inlet is disposed within a dense phase section of the producer body.

There are 1-4 secondary air inlets. One of the secondary air inlets is located between the dense phase section and a dilute phase section of the producer body. And the other secondary air inlets are disposed within the dilute phase section of the producer body.

The circulating coal inlet is disposed within the dense phase section of the producer body.

The upper raw coal inlet is disposed within a dilute phase section of the producer body.

An inclined tube is disposed at the circulating coal inlet, the inclined tube is connected to star shaped material feeders via pipelines, and an angle between the inclined tube and the axis of the producer body is 20°-30°.

The producer body has an inner structure with a larger upper part and a smaller lower part, and a cross-section area of the upper part is 3-7 times of that of the lower part.

An explosion-proof membrane orifice is disposed at upper part of the producer body, and a slag removal pipe is disposed at lower part of the producer body.

There are 6-8 nozzles holes disposed on each of the air caps, and a diameter of each of the nozzle holes is 4mm-6mm.

The present invention preferably provides a circulating coal fluidized bed coal gas producer system with designs of entering air twice, feeding coal at two inlets, two separations and circulations of powder coal. The gasification agent entering the producer and the coal gas coming out of the producer undergo heat exchanging so as to make the temperature of the gasification agent entering the producer reach 750°C-850°C. Therefore, the reaction heat consumption of the powder coal and the gasification agent is 20%-30% lower than that of gasification agent at room temperature. Furthermore, the combustible ingredient in the coal gas is 20%-30% higher than that of mixed coal gas with the gasification agent at room temperature. Specifically, in the present invention, the coal gas at 950°C-1100°C coming out of the coal gas producer and the gasification agent at 60°C-100°C undergo heat exchanging at the heat exchanger. Temperature of the gasification agent after heat exchanging rises up to 750°C-850°C. The coal gas with a temperature decreased to 400°C-500°C then enters the waste heat boiler for producing steam. After coming out from the waste heat boiler, temperature of the coal gas is decreased to about 150°C, and then the coal gas enters the Venturi scrubber and the washing tower for dust removal, and finally undergoes desulfurization before being sent to a user. By performing heat exchanging for the coal gas and the gasification agent, the heat energy of the coal gas is supplied to the gasification agent. The temperature of the gasification agent rises to increase the amount of steam, and the velocity of reaction with coal is accelerated, which not only lowers the coal consumption of the coal gas producer but also obtains better ingredient in the coal gas. Further more, the heat energy in the coal gas is effectively recalled so as to lower 20%-40% of the coal consumption. Comparing with the coal consumption 0.3 Kg/Nm³-0.4 Kg/Nm³ of the conventional coal gas producer using the gasification agent at room temperature, the coal consumption of the mixed coal gas in the present invention is decreased to 0.22 Kg/Nm³-0.25 Kg/Nm³. In addition, in the present invention, by disposing the lower raw coal inlet and at least one upper raw coal inlet and using two separations including a high temperature separation and a low temperature separation, the amount of the powder coal carried in the coal gas is greatly lowered. The powder coal separated is fed into the producer once again so as to further lower the coal consumption of the coal gas producer. In the coal gas producer of the present invention, by disposing the first air inlet and the secondary air inlet for supplying high temperature gasification agent, the lower raw coal inlet and the upper raw coal inlet, and the circulating coal inlet for supplying circulating coal, the powder coal keeps circulating within producer all the time for undergoing repeated burning and chemical reaction so as to realize fully burning and high heat efficiency. Further more, the producer body of the present invention is a cone with a larger upper part and a smaller lower part. A cross-section area of the upper part is about 3-7 times of that of the lower part, which can not only separate the powder coal more than 0.5mm but can also lower the velocity of the coal gas at the upper part of the producer body to 0.2 m/s-0.25m/s which is only 20% of that of the lower part. The coal gas stays and is gasified in the producer for a long time so as to further improve the ingredient of the coal gas. The present invention further uses a two-stage separation solution incorporating a high temperature separation and a low temperature separation so as to greatly lower the amount of the powder coal carried in the coal gas. The efficiency of the high temperature separation is 99%, the efficiency of the low temperature separation is 90%, the total efficiency is 99.9%, and the coal remained is no more than 0.2% of the total amount. The powder coal separated is fed into the producer once again to form circulating coal, which greatly lowers the coal consumption. In the present invention, a heat value of the mixed coal gas produced by using the gasification agent with air plus steam is 5600 KJ/Nm³-6000KJ/Nm³ (1350 kcal/ Nm³-1450kcal/ Nm³). The coal consumption is low, the heat value is high, the productivity is high and the cost is low.

The coal gas producer of the present invention may be a large-scale structure. Heated components may be made of fire resistant material. The cost is low, the life time is long, the fly ash loss is small, the utilization rate of coal is up to 95%, and the utilization rate of heat energy is also up to 90%. When using oxygen-enriched air plus steam as the gasification agent, semi-water coal gas can be obtained; when using pure oxygen plus steam as the gasification agent, water coal gas can be obtained. The coal gas after two-stage dry dust removal further undergoes wet dust removal in the Venturi scrubber and the washing tower, and desulfurization processing so that the amount of dust in the coal gas is less than 5mg/m³, and the amount of sulfur in the coal gas is less than 10 mg/m³.

The present invention will be described in more detail with reference to the drawings and embodiments.

### BRIEF DESCRIPTION OF THE DRAWINGS

Figure 1 is a schematic view of the present invention ;
Figure 2 is a schematic view illustrating the coal gas producer of the present invention.

Explanation of reference signs in figures:

| | | |
|---|---|---|
| 1-coal supplier ; | 2-coal gas producer ; | 3-high temperature separator ; |
| 4-low temperature separator ; | 5-heat exchanger ; | 6-waste heat boiler ; |
| 7-Venturi scrubber ; | 8-washing tower ; | 9-sedimentation tank ; |
| 10-cooling tower ; | 11-slag eliminator ; | 12-air blower ; |
| 13-star shaped material feeder ; | 14-water pump ; | 15-steam drum ; |
| 20-producer body ; | 21-first air inlet ; | 22-secondary air inlet ; |
| 23-circulating coal inlet ; | 24A-lower raw coal inlet ; | 24B- upper raw coal inlet ; |
| 25-coal gas outlet ; | 26-inclined tube ; | 27-slag removal pipe ; |
| 28-explosion-proof membrane orifice ; | 29-air cap. | |

### DETAILED DESCRIPTION

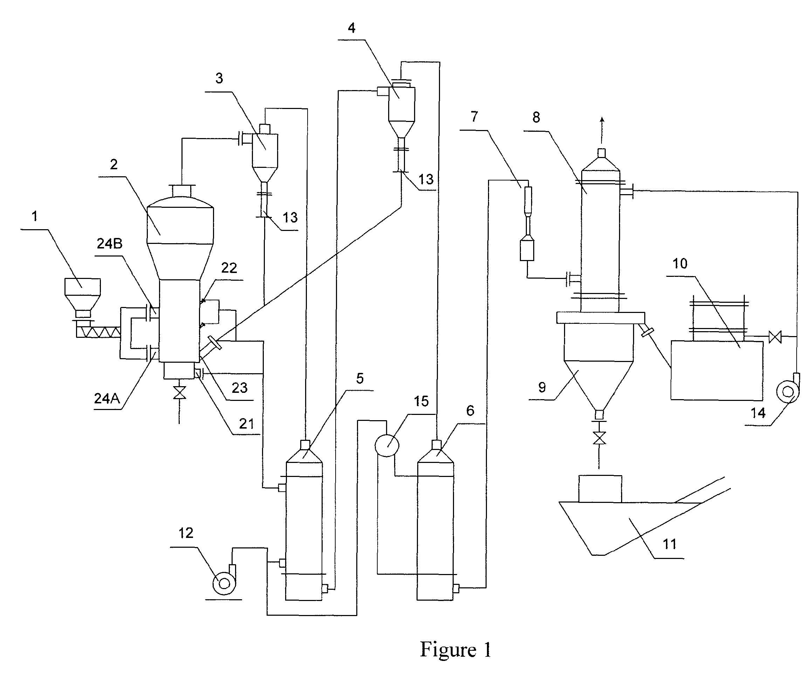

Figure 1 is a schematic view of the present invention. As shown in figure 1, the main configuration of the circulating coal fluidized bed coal gas producer system includes the following successively connected devices: a coal supplier 1, a coal gas producer 2, a high temperature separator 3, a heat exchanger 5, a low temperature separator 4, a waste heat boiler 6, a Venturi scrubber 7 and a washing tower 8. Row coal is supplied by the coal supplier 1 into the coal gas producer 2 and undergoes reaction to produce coal gas. The coal gas undergoes coal powder separation in the high temperature separator 3, heating the gasification agent in the heat exchanger 5, coal powder separation once again in the low temperature separator 4, producing steam in the waste heat boiler 6, removing dust in the Venturi scrubber 7 and washing in the washing tower 8, and then transmitted to the user. A first air inlet 21, at least one secondary air inlet 22 and a circulating coal inlet 23 are disposed on the coal gas producer 2. The first air inlet 21 and the secondary air inlet 22 for feeding high temperature gasification agent to the coal gas producer 2 are connected to the heat exchanger 5 via pipelines, used for feeding the high temperature gasification agent heated to about 750°C-850°C by the heat exchanger 5 into the coal gas producer 2. The circulating coal inlet 23 for feeding circulating coal to the coal gas producer 2 is connected to the high temperature separator 3 and the low temperature separator 4 via pipelines, used for feeding the powder coal with a particle size larger than 10 microns separated by the high temperature separator 3 and the low temperature separator 4 into the gas producer 2 once again. Besides, the circulating coal inlet 23 is also connected to the heat exchanger 5 via a pipeline, used for feeding the high temperature gasification agent at about 750°C-850°C into the coal gas producer 2 together with the circulating coal.

The present invention provides the circulating coal fluidized bed coal gas producer system with the designs of entering air twice, two separations and circulation of powder coal. In one aspect, by heat exchanging the coal gas going outside the producer and the gasification agent going inside the producer, the heat of the coal gas going outside the producer is supplied to the gasification agent going inside the producer, so that the temperature of the gasification agent is heated to about 750°C-850°C, so as to lower coal consumption of the coal gas producer and purify the coal gas. In another aspect, by adopting two separations of high temperature and low temperature, the amount of the powder coal carried in the coal gas is greatly lowered, and the separated powder coal is fed into the producer once again so as to further lower the coal consumption of the coal gas producer.

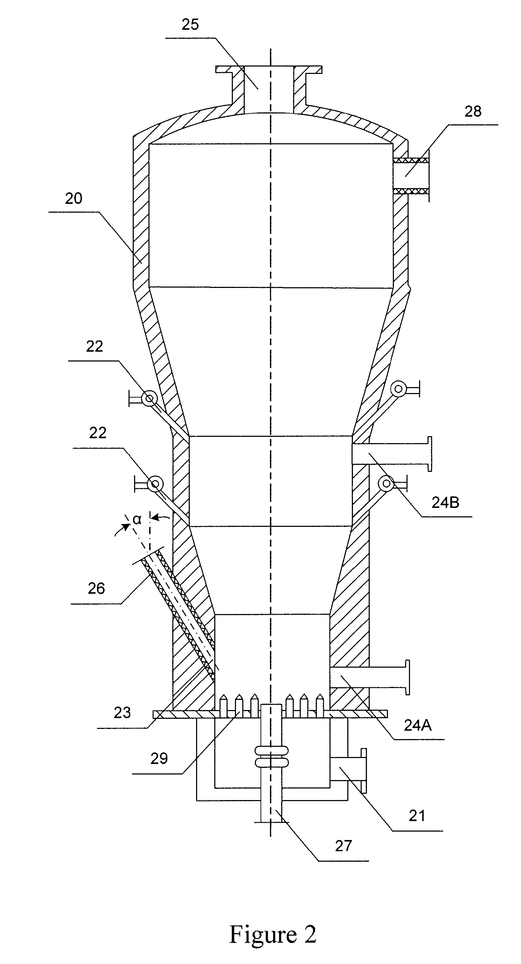

Figure 2 is a schematic view of the coal gas producer in accordance with the present invention. As shown in figure 2, the coal gas producer 2 includes a producer body 20. A first air inlet 21, at least one secondary air inlet 22, a circulating coal inlet 23, a lower raw coal inlet 24A and at least one upper raw coal inlet 24B are disposed on the producer body 20. A coal gas outlet 25 is disposed on top part of the producer body 20. The first air inlet 21 and the secondary air inlet 22 are used for feeding high temperature gasification agent into the producer. The circulating coal inlet 23 is used for feeding the separated powder coal with a particle size larger than 10 microns into the producer. The lower raw coal inlet 24A and the upper raw coal inlet 24B are connected to the coal supplier 1, used for supplying raw coal into the producer. The coal gas outlet is used for outputting high temperature coal gas. Specifically, the bottom part of the producer body 20 is connected with a gas incoming chamber, and air caps 29 are disposed between the producer body and the gas incoming chamber. The first air inlet 21 is disposed at the gas incoming chamber, the lower raw coal inlet 24A and the circulating coal inlet 23 are disposed at a dense phase section close to the air caps 29, and some of the secondary air inlets 22 and the upper raw coal inlet 24B are disposed at a dilute phase section above the dense phase section. The first air inlet 21 feeds the gasification agent at 750°C-850°C into the air incoming chamber and into the inner of the air caps 29. Air velocity of the gasification agent in air cap boxes reaches 2m/s-3m/s. Air velocity of the gasification agent blown out of nozzle holes of the air cap boxes reaches 30m/s-50m/s so that the powder coal with a particle size larger than 10 microns is boiled to form a fluidized state. Within an area with 50mm-80mm distance to the air cap boxes, all the oxygen in the gasification agent is burnt out along with the powder coal; then, steam, carbon dioxide and coal undergo reaction. Due to reacting in a high temperature area, most of the carbon dioxide becomes carbon monoxide, the steam becomes hydrogen gas and carbon monoxide gas, volatile substance in coal becomes gas and is cracked to methane and the like. In the present embodiment, each of the air caps 29 may use 1Cr18Ni9Ti stainless steel having 6-8 nozzle holes therein. Each of the nozzle holes has a diameter of 4mm-6mm. The connection between the air caps and the base of the producer body is driven fit. The connection between air caps is fixation by cement.

There may be 1-4 secondary air inlets 22 disposed on the producer body 22. One secondary air inlet at lower part is disposed between the dense phase section and the dilute phase section of the producer body; and the other secondary air inlets are disposed within the dilute phase section of the producer body. The lower raw coal inlet 24A and the circulating coal inlet 23 are disposed at the dense phase section of the producer body 20. Powder coal is fed via the lower raw coal inlet 24A and the circulating coal inlet 23 into the producer body 20. At the same time, the gasification agent is guided into the circulating coal inlet 23 so as to heat the circulating coal to burn and enter the producer. The upper raw coal inlet 24B is disposed within the dilute phase section of the producer body. Distance between the upper raw coal inlet 24B and the lower raw coal inlet 24A is 4000mm-5000mm, preferably is 4700mm. In the present invention, when starting up, the powder coal is fed via the lower raw coal inlet 24A. After a period of normal operating, the lower raw coal inlet 24A stops supplying coal, powder coal or caking coal is fed via the upper raw coal inlet 24B. The coal at the dense phase section mainly comes from the circulating coal fed via the circulating coal inlet 23. Since the temperature of the lower part is controlled by the circulating coal, the temperature at the area near to the upper raw coal inlet 24B is high so as to effectively improve the reaction efficiency. The coal fed via the upper raw coal inlet 24B may be the powder coal or the caking coal. In the present embodiment, the caking coal is preferable. The effect of adopting the upper raw coal inlet 24B for feeding coal lies in that: (1) when non-caking coal is used as raw material, the circulating coal at the lower part of the producer controls lower part temperature of the producer, and the amount of the circulating coal may reach up to 20-40 times of that of raw coal so as to use up the circulating coal for saving system coal consumption; (2) If the caking coal is fed via the lower raw coal inlet 24A into the producer, the caking coal tends to separate out adhesive liquid (coal tar) during temperature adjusting, and the adhesive liquid could cake the coal at the bottom of the producer to form coking; on the contrary, in the present embodiment, the caking coal is fed via the upper raw coal inlet 24B at the dilute phase section, the caking coal will immediately decompose adhesive liquid to gas so as to prevent the coking phenomena; (3) volatility ration of the caking coal may reach 50% so as to greatly increase ingredient and heat value of the coal gas. There may be 1-3 upper raw coal inlets 24B, which may be determined according to the amount of incoming coal. An inclined tube 26 is connected to the circulating coal inlet 23. An angle α between the inclined tube 26 and an axis of the producer body is 20°-30° so as to make the height of the powder coal in the inclined tube 26 more than the height of the dense phase section in the producer. Therefore, the inclined tube 26 feeds the powder coal with a particle size larger than 10 microns which is separated by the high temperature separator and the low temperature separator into the producer, and the powder coal is fed along with the gasification agent guided through the inclined tube into the producer to cause burning. In the present embodiment, the inclined tube 26 has a diameter of 200 mm with an inner part of stainless steel pipe, an outer part of carbon steel pipe, and a middle part of liner insulation layer. The inclined tube 26 is communicated to gasification agent gas at the bottom of the producer. The air inlet of gasification agent has a diameter of about 57mm so as to guide the powder coal into the producer depending on self weight and air spurt. In the above technical solution, by adding secondary high temperature gasification agent, the temperature of the coal gas is increased for providing heat during gasifying the steam and coal and burn up part of fine powder coal so as to reduce the coal brought out of the producer by the coal gas as much as possible.

In the present embodiment, the amount of the gasification agent fed into the producer via the first air inlet 21 takes up 50%-60% of the total amount of the gasification agent, 35%-45% of the gasification agent is fed into the producer via the secondary air inlet 22, and the other 5% of the gasification agent is fed into the producer via the circulating coal inlet 23. The total amount of the gasification agent refers to the amount of the gasification agent at the air outlet of the heat exchanger.

A slag removal pipe 27 is disposed at the bottom of the producer body 20, used to unload the stone ballast in the producer and the coarse-size coal in the coal therefrom. An explosion-proof membrane orifice 28 is disposed on the upper part of the producer body 20, used for preventing the coal gas and air in the producer from explosion caused by misoperation. Even if the explosion happened, the exploding gas would be spurted from the explosion-proof membrane orifice 28 on the upper part of the producer body instead of being spurted from the middle and lower part of the producer, which avoids burning and hurting operators. Considering that the inner temperature of the producer body is 900°C-1100°C, a fire brick layer is disposed within the producer body 20. An insulation layer is formed between fire bricks and the producer body for heat insulation, which can keep the outer temperature of the producer body below 60°C. The top part of the producer is a dome built by dome shaped fire bricks with an insulation layer which is supported on the producer body. Therefore, when thermal expanding, the expansion will only happens within the insulation layer.

In the coal gas producer 2 in accordance with the present invention, an inner part of the producer body 20 is a cone with a larger upper part and a smaller lower part. A cross-section area of the inner upper part of the producer is 3-7 times, preferably 5 times, of that of the inner lower part in order to keep the flow velocity of the coal gas at the inner upper part of the producer below 0.2m/s-0.25m/s. The velocity only 20% of that of the lower part. In one aspect, the powder coal greater than 0.5mm is separated out and undergoes circulation reaction within the producer, and at the same time, the time period when the powder coal stays within the producer increases to more than 30 minutes so as to ensure the ingredient of the coal gas and the chemical reaction of the powder coal; on the other aspect, the time period when the coal gas stays within the producer increases to about 10 seconds so as to prolong gasification time period and obtain coal gas with better ingredient.

The high temperature separator 3 is provided with a high temperature separator coal gas inlet, a high temperature separator coal gas outlet and a high temperature separator powder coal outlet. The high temperature separator coal gas inlet is connected to the coal gas outlet 25 of the coal gas producer 2 via a pipeline in order to feed the coal gas into the high temperature separator 3. The high temperature separator powder coal outlet is provided with a star shaped material feeder 13 which is connected to the circulating coal inlet 23 of the coal gas producer 2 via a pipeline and the inclined tube 26 in order to feed the powder coal separated from the high temperature separator 3 back to the coal gas producer 2 by controlling the amount of coal supplied. In the present embodiment, the high temperature separator 3 may use a quantitative irregular-shaped tube inlet, i.e., E-type cyclone dust catcher. The high temperature separator 3 may be lined with a fire resistant and heat insulation layer therein with a cap made of fire cement and a central pipe made of high temperature resistant material 1Cr25Ni20 steel. The star shaped material feeder 13 is also a high temperature resistant structure including a main shaft which is a hollow shaft using water cooling therein, and a housing which is a high temperature resistant stainless steel-lined aluminosilicate fiberboard. The temperature of the housing can be kept at only 50°C-60°C. Seal of ending face can prevent from leakage of coal gas. The high temperature separator 3 can separate the powder coal with a particle size larger than 10 microns completely and the separating efficiency may even reach up to 99%.

The heat exchanger 5 is provided with a heat exchanger coal gas inlet, a heat exchanger coal gas outlet, a heat exchanger air inlet and a heat exchanger air outlet. The coal gas at high temperature coming out from the high temperature separator 3 and the gasification agent which will be fed into the coal gas producer 2 undergo heat exchanging within the heat exchanger 5. Specifically, the heat exchanger coal gas inlet is connected to the high temperature separator coal gas outlet of the high temperature separator 3 via a pipeline in order to feed the coal gas at high temperature coming out from the high temperature separator 3 into the heat exchanger 5 for heat exchanging. An air blower 12 is connected to the heat exchanger air inlet. The heat exchanger air outlet is connected to the first air inlet 21 and the secondary air inlet 22 of the coal gas producer 2 via a pipeline and is also connected to the circulating coal inlet 23 of the coal gas producer 2 via a pipeline. The gasification agent undergoing heat exchanging in the heat exchanger 5 is fed into the first air inlet 21, the secondary air inlet 22 and the circulating coal inlet 23 of the coal gas producer 2. After the above heat exchanging, the temperature of the coal gas decreases from 900°C-1000°C to 400°C-500°C, and the temperature of the gasification agent rises from 60°C-100°C to 750°C-850°C. The heat exchanger 5 may be a multi-tubular concurrent or a multi-tubular counter current heat exchanger. When the multi-tubular concurrent heat exchanger is used, the temperature of multi-tube is kept below 750°C. The material of the multi-tube is 1Cr18Ni9Ti steel. In the present embodiment, the heat exchanger 5 uses the multi-tubular countercurrent heat exchanger. The material of the multi-tube is aluminized 1Cr18Ni9Ti steel or 1Cr25Ni20 steel which can be resistant to 900°C-1000°C.

The low temperature separator 4 is provided with a low temperature separator coal gas inlet, a low temperature separator coal gas outlet and a low temperature separator powder coal outlet. The low temperature separator coal gas inlet is connected to the heat exchanger coal gas outlet of the heat exchanger 5 via a pipeline in order to feed the coal gas into the low temperature separator 4. A star shaped material feeder 13 is disposed at the low temperature separator powder coal outlet and the star shaped material feeder 13 is connected to the circulating coal inlet 23 of the coal gas producer 2 via a pipeline in order to feed the powder coal separated by the low temperature separator 4 back to the coal gas producer 2. In the present embodiment, the efficiency of low temperature separation is 90%. The low temperature separator 4 separates most of the coal from the coal gas with only a part of fine coal with a particle size less than 5µm remained.

The present invention uses a two-stage separation (i.e., the above high temperature separation and the low temperature separation) so as to greatly lower the amount of powder coal carried in coal gas. The efficiency of high temperature separation is 99%, the efficiency of low temperature separation is 90%, the total efficiency is 99.9%, and the amount of coal remained is only less than 0.2% of the total amount. Besides, the powder coal separated is fed back to the producer as circulating coal, which greatly lowers the coal consumption. Since the coal gas fed into the heat exchanger 5 only contains powder coal with a particle size less than 10µm, abrasion for the heat exchanger 5 is quite slight, which improves the efficiency of heat exchanging and life time of the heat exchanger 5.

The waste heat boiler 6 is connected to the low temperature separator coal gas outlet of the low temperature separator 4 via a pipeline. The coal gas coming out from the low temperature separator 4 transfers its heat energy to the water in the waste heat boiler 6 so as to change the water into steam. The steam is fed into the heat exchanger air inlet by the steam drum 15 and is heated after mixing with the air coming from the air blower 12. The temperature of the coal gas entering the waste heat boiler 6 is 400°C-500°C. The temperature of the coal gas flowing from the waste heat boiler 6 is about 150°C. Therefore, there is enough heat energy to provide enough steam for use of producing coal gas.

The Venturi scrubber 7 is connected to the waste heat boiler 6 via a pipeline. The coal gas coming out from the waste heat boiler 6 contacts with water in the Venturi scrubber 7 for washing the powder coal out of the coal gas. After the coal gas at about 150°C enters the Venturi scrubber 5, its temperature decreases to 50°C-60°C. At this time, 90% of the powder coal at 0-5µm in the coal gas is washed out. The washing tower 8 is provided with a washing tower coal gas inlet, a washing tower coal gas outlet, a washing liquid outlet, a cooling water inlet and a cooling water outlet. The washing tower coal gas inlet is connected to the Venturi scrubber 7 via a pipeline for further washing the powder coal out of the coal gas. The coal gas after washing is fed to the user for use via the washing tower coal gas outlet. At this time, when the coal gas departs the washing tower 8, the amount of coal contained is only about 5mg/Nm³. A sedimentation tank 9 is disposed at the washing liquid outlet for precipitating the powder coal. And then, the wet powder coal concentrated is filtered by a filter and is exhausted by the slag eliminator 11 which may be a vacuum filter. A cooling tower 10 is connected between the cooling water inlet and the cooling water outlet. The cooling water in the washing tower 8 enters the cooling tower 10 via the cooling water outlet for cooling and fed back into the washing tower 8 via the cooling water inlet after cooling. In the present embodiment, the washing tower 8 may use filing-type and swirl-type which may be determined according to the size of the tower. The washing liquid at the bottom of the washing tower enters the sedimentation tank 9. Since the cross-section area is increased, the flow velocity of the water is decreased to 0.02m/s so as to make the powder coal subside. The water goes up into the cooling tower 10 for cooling and then is pumped by a water pump 14 into the washing tower 8 and the Venturi scrubber 7 for washing. It can be seen that, the coal gas after two-stage dry dust removal further undergoes wet dust removal in the Venturi scrubber and the washing tower, and desulfurization processing so as to make the amount of dust contained in the coal gas less than 5mg/m³, and the amount of sulfur contained in the coal gas less than 10 mg/m³.

Based on the above technical solutions, if the amount of water contained in coal fed into the producer is greater than 8%, a drying machine may be disposed before the raw coal inlet 24. In addition, some instruments and auto-control systems may be further disposed in order to enable the present invention to implement fully automatic adjustment and control to the system, which will not be explained in detail.

Finally, it should be noted that the above embodiments are merely provided for describing the technical solutions of the present invention, but not intended to limit the present invention. It should be understood by those of ordinary skill in the art that although the present invention has been described in detail with reference to the foregoing embodiments, modifications can be made to the technical solutions described in the foregoing embodiments, or equivalent replacements can be made to some technical features in the technical solutions, as long as such modifications or replacements do not cause the essence of corresponding technical solutions to depart from the scope of the present invention.

## Claims

1. A circulating coal fluidized bed coal gas producer system, comprising a coal gas producer (2), a high temperature separator (3), a heat exchanger (5), a low temperature separator (4), and a waste heat boiler (6), which are connected successively, wherein the coal gas producer (2) is provided with a first air inlet (21) and at least one secondary air inlet (22) for feeding high temperature gasification agent into the producer (2), and is provided with a circulating coal inlet (23) for feeding circulating coal into the producer (2), the first air inlet (21) and the secondary air inlet (22) are connected to the heat exchanger (5), the heat exchanger (5) is further connected to an air blower (12) and the waste heat boiler (6) respectively, and the circulating coal inlet (23) is connected to the high temperature separator (3), the low temperature separator (4) and the heat exchanger (5) respectively.

2. The system according to claim 1, wherein the coal gas producer (2) is provided with a coal gas outlet (25), a lower raw coal inlet (24A) and at least one upper raw coal inlet (24B), the lower raw coal inlet (24A) and the upper raw coal inlet (24B) are connected to a coal supplier (1), and the coal gas outlet (25) is connected to the high temperature separator (3).

3. The system according to claim 1, wherein star shaped material feeders (13) are respectively disposed between the high temperature separator (3) and the circulating coal inlet (23), and between the low temperature separator (4) and the circulating coal inlet (23).

4. The system according to claim 1, wherein the system further comprises a Venturi scrubber (7) connected to the waste heat boiler (6) and comprises a washing tower (8) connected to the Venturi scrubber (7), a sedimentation tank (9) is disposed at the bottom of the washing tower (8), a slag eliminator (11) is disposed at the bottom of the sedimentation tank (9), and a cooling tower (10) is disposed between a cooling water inlet and a cooling water outlet of the washing tower (8).

5. The system according to claim 1, wherein the heat exchanger (5) is adapted to provide the gasification agent to the producer (2) via the first air inlet (21) and the secondary air inlet (22) with a temperature of 750°C-850°C.

6. The system according to claim 1, wherein the heat exchanger (5) is adapted to provide an amount of first gasification agent to the producer (2) via the first air inlet (21) of 50%-60% of total amount of gasification agent at the heat exchanger (5), an amount of secondary gasification agent to the producer (2) via the secondary air inlet (22) of 35%-45% of the total amount of the gasification agent at the heat exchanger (5), and an amount of gasification agent to the producer via the circulating coal inlet (23) of 5% of the total amount of the gasification agent at the heat exchanger (5).

7. The system according to claim 2, wherein the coal gas producer (2) comprises a producer body (20), bottom of the producer body is connected to a gas incoming chamber, air caps (29) are disposed between the producer body (20) and the gas incoming chamber, the first air inlet (21) is disposed at the gas incoming chamber, and the lower raw coal inlet (24A) is disposed within a dense phase section of the producer body (20).

8. The system according to claim 7, wherein there are 1-4 secondary air inlets (22), one of the secondary air inlets (22) is located between the dense phase section and a dilute phase section of the producer body (20), the other secondary air inlets (22) are disposed within the dilute phase section of the producer body (20).

9. The system according to claim 7, wherein the upper raw coal inlet (24B) is disposed within a dilute phase section of the producer body (20).

10. The system according to claim 7, wherein an inclined tube (26) is disposed at the circulating coal inlet (23), the inclined tube (26) is connected to star shaped material feeders (13) via pipelines, and an angle (α) between the inclined tube (26) and the axis of the producer body (20) is 20°-30°.

11. The system according to claim 7, wherein the producer body (20) has an inner structure with a larger upper part and a smaller lower part, and a cross-section area of the upper part is 3-7 times of that of the lower part.

12. The system according to claim 7, wherein an explosion-proof membrane orifice is disposed at upper part of the producer body (20), and a slag removal pipe (27) is disposed at lower part of the producer body (20).

13. The system according to claim 7, wherein there are 6-8 nozzles holes disposed on each of the air caps (29) and a diameter of each of the nozzle holes is 4mm-6mm.

14. The system according to claim 7, wherein a distance between the upper raw coal inlet (24B) and the lower raw coal inlet (24A) is 4000mm-5000mm.

15. The system according to claim 7, wherein the circulating coal inlet (23) is disposed within the dense phase section of the producer body (20).

## Patentansprüche

1. Ein kohlegaserzeugendes System mit Zirkulierende-Kohle-Wirbelschicht, bestehend aus einem Kohlegaserzeuger (2), einer Hochtemperatur-Abscheidevorrichtung (3), einer Niedertemperatur-Abscheidevorrichtung (4) und einem Abhitzekessel (6), welche nacheinander verbunden werden, wobei der Kohlegaserzeuger (2) mit einem primären Lufteinlass (21) und mindestens einem sekundären Lufteinlass (22) verbunden ist, um dem Erzeuger (2) Hochtemperatur-Vergasungsmittel zuzuführen, und mit einem Zirkulierende-Kohlen-Einlass (23), um zirkulierende Kohle dem Erzeuger (2) zuzuführen, der primäre Lufteinlass (21) und der sekundäre Lufteinlass (22) sind mit diesem verbunden und dieser ist wiederum jeweils mit dem Luftgebläse (12) und dem Abhitzekessel (6) verbunden und der Zirkulierende-Kohlen-Einlass (23) ist jeweils mit der Hochtemperatur-Abscheidevorrichtung (3), der Niedertemperatur-Abscheidevorrichtung (4) und dem Wärmetauscher (5) verbunden.

2. Ein System gemäß Anspruch 1, worin der Kohlegaserzeuger (2) mit einem Kohlegasauslass (25) ausgestattet ist, einem niedrigeren Kohleeinlass (24A) und mindestens einem höheren Kohleeinlass (24B), der niedrige Kohleeinlass (24A) und der höhere Kohleeinlass (24B) sind mit einem Kohlelieferanten (1) und dem Kohlegasauslass (25) mit der Hochtemperatur-Abscheidevorrichtung (3) verbunden.

3. Ein System gemäß Anspruch 1, worin sternförmige Materialeinzüge (13) jeweils zwischen der Hochtemperatur-Abscheidevorrichtung (3) und dem Zirkulierende-Kohlen-Einlass (23) sowie zwischen der Niedertemperatur-Abscheidevorrichtung (4) und dem Zirkulierende-Kohlen-Einlass (23) angeordnet sind.

4. Ein System gemäß Anspruch 1, worin das System außerdem einen Venturiwäscher (7) umfasst, welcher mit dem Abhitzekessel (6) und mit einem Waschturm (8) verbunden ist, welcher wiederum mit einem Venturiwäscher (7) verbunden ist, einem Absetzbecken (9), dass am Waschturm (8) gelegen ist, ein Schlacke-Entferner (11) ist am Boden des Absetzbecken (9) gelegen und ein Kühlturm (10) ist zwischen einem Kühlwassereinlass und einem Kühlwasserauslass des Waschturms (8) gelegen.

5. Ein System gemäß Anspruch 1, worin der Wärmetauscher (5) so angepasst ist, dass er das Vergasungsmittel zu dem Erzeuger (2) über den primären Lufteinlass (21) und den sekundären Lufteinlass (22) mit einer Temperatur von 750°C-850°C weiterleitet.

6. Ein System gemäß Anspruch 1, worin der Wärmetauscher (5) so angepasst ist, dass er das Vergasungsmittel zu dem Erzeuger (2) über den primären Lufteinlass (21) mit 50%-60% der Gesamtmenge des Vergasungsmittels an den Wärmetauschers (5) liefert, sowie eine Menge des sekundären Vergasungsmittels mit dem Erzeuger (2) über den sekundären Lufteinlass (22) mit 35%-45% der Gesamtmasse des
Vergasungsmittels an den Wärmetauscher (5) und eine Menge an Vergasungsmittel an den Erzeuger über den Zirkulierende-Kohlen-Einlass (23) mit 5% der Gesamtmasse des Vergasungsmittels an den Wärmetauscher (5) liefert.

7. Ein System gemäß Anspruch 2, worin der Kohlegaserzeuger (2) eine Erzeugungsvorrichtung (20) umfasst, der Boden der Erzeugungsvorrichtung mit einer Gaseinlasskammer verbunden ist, Luftkappen (29) zwischen der Erzeugungsvorrichtung (20) und der Gaseinlasskammer gelegen sind, der primäre Lufteinlass (21) an der Gaseinlasskammer gelegen ist und der niedrige Kohleeinlass (24A) an einem dichten Phasenabschnitt der Erzeugungsvorrichtung (20) gelegen ist.

8. Ein System gemäß Anspruch 7, worin es 1-4 sekundäre Lufteinlässe (22) gibt, einer der sekundären Lufteinlässe (22) ist zwischen dem dichten Phasenabschnitt und dem verdünnten Phasenabschnitt der Erzeugungsvorrichtung (20) gelegen, der andere sekundäre Lufteinlass (22) ist innerhalb des verdünnten Phasenabschnittes der Erzeugungsvorrichtung (20) gelegen.

9. Ein System gemäß Anspruch 7, worin der höhere Kohleeinlass (24B) innerhalb des verdünnten Phasenabschnittes der Erzeugungsvorrichtung (20) gelegen ist.

10. Ein System gemäß Anspruch 7, worin ein Schrägrohr (26) an dem Zirkulierende-Kohlen-Einlass (23) gelegen ist, das Schrägrohr (26) ist mit sternförmigen Materialeinzügen (13) über Rohrleitungen verbunden, und ein Winkel (α) zwischen dem Schrägrohr (26) und der Achse der Erzeugungsvorrichtung (20) der 20°-30° beträgt.

11. Ein System gemäß Anspruch 7, worin die Erzeugungsvorrichtung (20) eine innere Struktur mit einem größeren oberen Teil und einem kleinen unteren Teil aufweist und einer Querschnittsfläche des oberen Teils, die um 3-7 Mal größer ist als die des unteren Teils.

12. Ein System gemäß Anspruch 7, worin eine explosionsgeschützte Membrandüse an einem oberen Teil der Erzeugungsvorrichtung (20) gelegen ist, und ein Schlacke-Entsorgungsrohr (27) am unteren Teil der Erzeugungsvorrichtung (20) gelegen ist.

13. Ein System gemäß Anspruch 7, worin es 6-7 Loch-Düsen an jeder Luftkappe (29) gibt und der Durchmesser jeder Loch-Düse 4mm-6mm beträgt.

14. Ein System gemäß Anspruch 7, worin die Distanz zwischen dem höheren Kohleeinlass (24B) und dem niedrigen Kohleeinlass (24A) 4000mm-5000mm beträgt.

15. Ein System gemäß Anspruch 7, worin der Zirkulierende-Kohlen-Einlass (23) innerhalb des dichten Phasenabschnittes der Erzeugungsvorrichtung (20) gelegen ist.

## Revendications

1. Système de production de gaz de houille à lit fluidisé et circulation de charbon, comprenant un dispositif de production de gaz de houille (2), un séparateur à haute température (3), un échangeur de chaleur (5), un séparateur à basse température (4), et une chaudière de récupération de chaleur (6), qui sont raccordés de manière successive, dans lequel le dispositif de production de gaz de houille (2) est doté d'une première admission d'air (21) et d'au moins une admission d'air secondaire (22) pour l'alimentation en un agent de gazéification à haute température dans le dispositif de production (2), et est doté d'une admission de charbon en circulation (23) pour l'alimentation en charbon en circulation dans le dispositif de production (2), la première admission d'air (21) et l'admission d'air secondaire (22) sont raccordées à l'échangeur de chaleur (5), l'échangeur de chaleur (5) est en outre raccordé à une soufflante d'air (12) et à la chaudière de récupération de chaleur (6) respectivement, et l'admission de charbon en circulation (23) est raccordée au séparateur à haute température (3), au séparateur à basse température (4) et à l'échangeur de chaleur (5) respectivement.

2. Système selon la revendication 1, dans lequel le dispositif de production de gaz de houille (2) est doté d'une évacuation de gaz de houille (25), d'une admission de charbon brut inférieure (24A) et d'au moins une admission de charbon brut supérieure (24B), l'admission de charbon brut inférieure (24A) et l'admission de charbon brut supérieure (24B) sont raccordées à un dispositif de fourniture de charbon (1), et l'évacuation de gaz de houille (25) est raccordée au séparateur à haute température (3).

3. Système selon la revendication 1, dans lequel des dispositifs d'alimentation en matériaux en forme d'étoile (13) sont respectivement disposés entre le séparateur à haute température (3) et l'admission de charbon en circulation (23), et entre le séparateur à basse température (4) et l'admission de charbon en circulation (23).

4. Système selon la revendication 1, dans lequel le système comprend en outre un laveur à Venturi (7) raccordé à la chaudière de récupération de chaleur (6) et comprend une tour de lavage (8) raccordée au laveur à Venturi (7), une cuve de sédimentation (9) est disposée au fond de la tour de lavage (8), un éliminateur de scories (11) est disposé au fond de la cuve de sédimentation (9), et une tour de refroidissement (10) est disposée entre une admission d'eau de refroidissement et une évacuation d'eau de refroidissement de la tour de lavage (8).

5. Système selon la revendication 1, dans lequel l'échangeur de chaleur (5) est adapté à fournir l'agent de gazéification au dispositif de production (2) via la première admission d'air (21) et l'admission d'air secondaire (22) avec une température de 750°C à 850°C.

6. Système selon la revendication 1, dans lequel l'échangeur de chaleur (5) est adapté à fournir une quantité de premier agent de gazéification au dispositif de production (2) via la première admission d'air (21) de 50 % à 60 % de la quantité totale d'agent de gazéification au niveau de l'échangeur de chaleur (5), une quantité d'agent de gazéification secondaire au dispositif de production (2) via l'admission d'air secondaire (22) de 35 % à 45 % de la quantité totale de l'agent de gazéification au niveau de l'échangeur de chaleur (5), et une quantité d'agent de gazéification au dispositif de production via l'admission de charbon en circulation (23) de 5 % de la quantité totale de l'agent de gazéification au niveau de l'échangeur de chaleur (5).

7. Système selon la revendication 2, dans lequel le dispositif de production de gaz de houille (2) comprend un corps de dispositif de production (20), le fond du corps de dispositif de production est raccordé à une chambre d'arrivée de gaz, des chapeaux d'air (29) sont disposés entre le corps de dispositif de production (20) et la chambre d'arrivée de gaz, la première admission d'air (21) est disposée au niveau de la chambre d'arrivée de gaz, et l'admission de charbon brut inférieure (24A) est disposée à l'intérieur d'une section de phase dense du corps de dispositif de production (20).

8. Système selon la revendication 7, dans lequel il y a 1 à 4 admissions d'air secondaires (22), l'une des admissions d'air secondaires (22) est située entre la section de phase dense et une section de phase diluée du corps de dispositif de production (20), les autres admissions d'air secondaires (22) sont disposées à l'intérieur de la section de phase diluée du corps de dispositif de production (20).

9. Système selon la revendication 7, dans lequel l'admission de charbon brut supérieure (24B) est disposée à l'intérieur d'une section de phase diluée du corps de dispositif de production (20).

10. Système selon la revendication 7, dans lequel un tube incliné (26) est disposé au niveau de l'admission de charbon en circulation (23), le tube incliné (26) est raccordé aux dispositifs d'alimentation en matériaux en forme d'étoile (13) via des pipelines, et un angle (α) entre le tube incliné (26) et l'axe du corps de dispositif de production (20) est de 20° à 30°.

11. Système selon la revendication 7, dans lequel le corps de dispositif de production (20) comprend une structure interne présentant une partie supérieure plus grande et une partie inférieure plus petite, et une zone de section transversale de la partie supérieure représente 3 à 7 fois celle de la partie inférieure.

12. Système selon la revendication 7, dans lequel un orifice de membrane antidéflagrant est disposé au niveau d'une partie supérieure du corps de dispositif de production (20), et un tuyau d'élimination de scories (27) est disposé au niveau d'une partie inférieure du corps de dispositif de production (20).

13. Système selon la revendication 7, dans lequel il y a 6 à 8 trous de buse disposés sur chacun des chapeaux d'air (29) et le diamètre de chacun des trous de buse est de 4 mm à 6 mm.

14. Système selon la revendication 7, dans lequel une distance entre l'admission de charbon brut supérieure (24B) et l'admission de charbon brut inférieure (24A) est de 4000 mm à 5000 mm.

15. Système selon la revendication 7, dans lequel l'admission de charbon en circulation (23) est disposée à l'intérieur de la section de phase dense du corps de dispositif de production (20).
